# EUROPEAN PATENT SPECIFICATION

(11) **EP 2 288 108 B1**
(45) Date of publication and mention of the grant of the patent: **07.06.2017**
(21) Application number: 09765346.3
(22) Date of filing: 17.04.2009
(51) Int. Cl.: H04L 29/06, H04L 29/08, H04N 21/2668, H04N 21/258, H04N 21/84, H04N 21/81

(54) **METHOD AND NETWORK EQUIPMENT FOR ESTABLISHING INDIVIDUALIZED CONTENT DELIVERY CHANNEL**
VERFAHREN UND NETZWERKGERÄT ZUR HERSTELLUNG EINES INDIVIDUALISIERTEN INHALTSABLIEFERUNGSKANALS
PROCÉDÉ ET ÉQUIPEMENT DE RÉSEAU PERMETTANT L ÉTABLISSEMENT DE CANAL DE DISTRIBUTION DE CONTENU INDIVIDUALISÉ

(30) Priority: 20.06.2008 CN 200810115322
(43) Date of publication of application: 23.02.2011
(73) Proprietor: Huawei Technologies Co., Ltd., Longgang District Shenzhen, Guangdong 518129 (CN)
(72) Inventor: PENG, Zhaojun c/o Huawei Technologies Co.Ltd., Int.Prop.Dept., Shenzhen (CN); WANG, Feng c/o Huawei Technologies Co.Ltd., Int.Prop.Dept., Shenzhen (CN)
(74) Representative: Thun, Clemens
(86) International application number: PCT/CN2009/071336
(87) International publication number: WO 2009/152706

(56) References cited:
- EP-A1- 1 819 125
- WO-A2-2008/005656
- CN-A- 1 662 003
- CN-A- 101 179 630
- US-A1- 2007 074 245
- US-A1- 2007 220 553

## Description

### Field of the Invention

The present invention relates to the field of network technologies, and in particular, to a User Equipment (UE), a network device and a method for creating a personalized content delivery channel.

### Background of the Invention

Internet Protocol Television (IPTV) is a network transmission technology for transmitting multimedia files such as video and audio content on a packet switched network by using a streaming transmission technology. Through the IPTV service, a user watches the video or audio content while downloading it before the whole file is downloaded to a local directory. An IP Multimedia Subsystem (IMS) is a subsystem overlaid on an existing 3rd Generation Partnership Project (3GPP) packet network. The IMS uses the Session Initiation Protocol (SIP) as a service control protocol, and provides rich multimedia services by virtue of the SIP features such as simplicity, extensibility and easy combination of media. An IMS includes a Call Session Control Function (CSCF), which controls user registration and sessions. By accessing the CSCF through a UE, the user accesses the IMS. The IMS based IPTV is an IPTV service provided in the IMS architecture. It provides the user with streaming services and multimedia services that integrate streaming services and real-time session services by fully utilizing the existing mechanisms of an IMS network, for example, registration, authentication, routing, session control and setup, service triggering, charging, and end-to-end Quality of Service (QoS) assurance.

In the existing IPTV service, all users that watch the same program see the same content at every moment. For example, when an advertisement is broadcast at the interval between programs, all users see the same advertisement. However, users generally have different requirements and expect to see different advertisements. The prior art does not enable delivery of personalized content to the users, and cannot meet the requirements for watching personalized content.

WO 2008/005656 A2 discloses a method and apparatus for providing a personalized channel on packet networks. For example, a customer may subscribe to a personalized channel service. In one embodiment, a network service provider determines a customer's viewing preference and matches the customer's viewing preference to at least one program that is currently being broadcasted on one of a plurality of broadcast channels. In turn, the personalized channel is populated with the at least one program, i.e., with the program of most interest to the customer.

US 2007/0074245 A1 discloses a method in which a request is received to view a virtual television channel. A user associated with the request is identified along with user preferences associated with that user. Content, such as television programs, music, and games, is identified that satisfies the identified user preferences. The identified content is ranked based on the user preferences, which generates highest-ranked content. At least a portion of the highest-ranked content is then displayed.

### Summary of the Invention

The present invention provides a UE, a network device and a method for creating a personalized content delivery channel to deliver personalized content suitable for each user.

According to the first aspect of the present invention a method for creating a personalized content delivery channel is provided according to claim 1.

According to the third aspect of the present invention a network device is provided according to claim 8.

As seen from the foregoing technical solution, personalized content information suitable for the user is determined in the present invention and then a personalized content delivery channel is created according to the determined information. Therefore, the personalized content suitable for the user can be displayed to the user.

### Brief Description of the Drawings

FIG. 1 is a flowchart of a method for creating a personalized content delivery channel according to a first embodiment of the present invention;
FIG 2 is a flowchart of a method for creating a personalized content delivery channel according to a second embodiment of the present invention;
FIG. 3 is a flowchart of creating a personalized content delivery channel according to a first embodiment of the present invention;
FIG. 4 is a flowchart of creating a personalized content delivery channel according to a second embodiment of the present invention;
FIG. 5 is a flowchart of creating a personalized content delivery channel according to a third embodiment of the present invention;
FIG. 6 is a flowchart of creating a personalized content delivery channel according to a fourth embodiment of the present invention;
FIG. 7 is a flowchart of a method for creating a personalized content delivery channel according to a third embodiment of the present invention;
FIG. 8 is a flowchart of a method for creating a personalized content delivery channel according to a fourth embodiment of the present invention;
FIG. 9 is a flowchart of creating a personalized content delivery channel according to a fifth embodiment of the present invention;
FIG. 10 is a flowchart of creating a personalized content delivery channel according to a sixth embodiment of the present invention;
FIG. 11 is a flowchart of a method for creating a personalized content delivery channel according to a fifth embodiment of the present invention;
FIG. 12 is a flowchart of a method for creating a personalized content delivery channel according to a sixth embodiment of the present invention;
FIG. 13 is a flowchart of deleting a personalized content delivery channel according to a first embodiment of the present invention;
FIG. 14 is a flowchart of deleting a personalized content delivery channel according to a second embodiment of the present invention;
FIG. 15 is a flowchart of deleting a personalized content delivery channel according to a third embodiment of the present invention;
FIG. 16 shows a structure of a UE according to a first embodiment of the present invention;
FIG. 17 shows a structure of a UE according to a second embodiment of the present invention;
FIG. 18 shows a structure of a UE according to a third embodiment of the present invention;
FIG. 19 shows a structure of a network device according to a first embodiment of the present invention; and
FIG. 20 shows a structure of a network device according to a second embodiment of the present invention.

### Detailed Description of the Embodiments

The technical solution under the present invention is detailed below with reference to accompanying drawings and exemplary embodiments.

In all embodiments of the present invention, "personalized content suitable for a user" or "content" refers to the content suitable for a single user or suitable for a group of users.

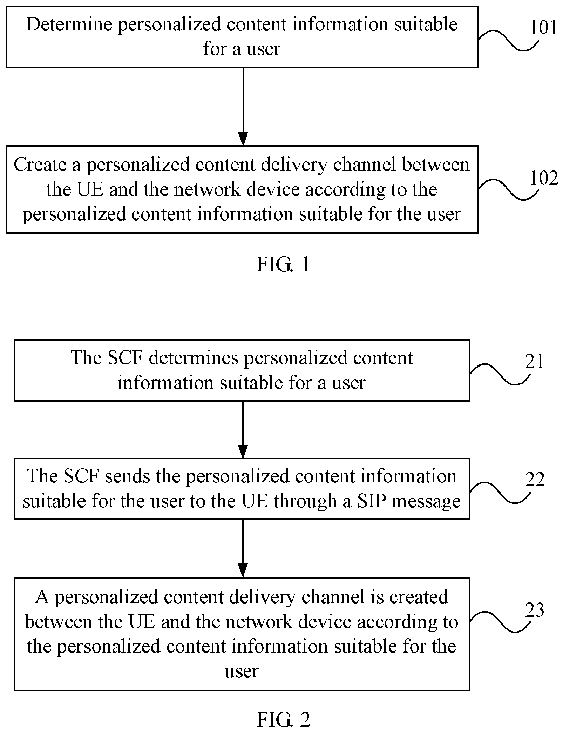

FIG. 1 is a flowchart of a method for creating a personalized content delivery channel according to a first embodiment of the present invention. The method in this embodiment includes:
Step 101: Determine personalized content information suitable for a user.

This step may be executed by a UE or a network device such as a Service Control Function (SCF), a Media Function (MF), an Advertisement (AD) server, or an AD application server. The SCF may be an SCF that controls different services, for example, a BC-SCF, a COD-SCF, or an AD-SCF. The personalized content information depends on the personalized content metadata or personalized channel ID and the user's personalized data. The personalized content metadata or personalized channel ID is designed to represent the information about the personalized content provided by the network, for example, the time of sending the personalized content, and type of the personalized content. The personalized content metadata includes at least one of these items: time of inserting the advertisement, duration of the advertisement, and advertisement ID. The user's personalized data is designed to represent user information, and may be information such as the user's content watching time, favorite content type, shopping preferences, and presence information. Therefore, the personalized content information that matches the user can be determined according to the personalized content metadata or personalized channel ID and the user's personalized data.

Step 102: Create a personalized content delivery channel between the UE and the network device according to the personalized content information.

The network device sends personalized content to the UE through the personalized content delivery channel. The personalized content includes different types of content suitable for the user, for example, advertisements and games. The following embodiments take advertisement as an example.

The foregoing steps are not sequence-sensitive. Both of the following scenarios are appropriate. Scenario 1: The personalized content information is determined first, and then the personalized content delivery channel is created according to the personalized content information; or, scenario 2: The personalized content information is determined in the process of creating the personalized content delivery channel. The second embodiment to the fourth embodiment below involve scenario 1, and the fifth embodiment and the sixth embodiment below involve scenario 2.

In the embodiments of the present invention, a personalized content delivery channel suitable for the user is created so that the user can obtain personalized content.

FIG. 2 is a flowchart of a method for creating a personalized content delivery channel according to a second embodiment of the present invention. In this embodiment, the SCF determines the personalized content information first, and then creates a personalized content delivery channel. The method includes:
Step 21: The SCF determines personalized content information suitable for the user. Specifically, the SCF may determine the personalized content information suitable for the user according to the personalized content metadata or personalized content channel ID and the user's personalized data, or query other entities such as the AD server or AD application server for the personalized content information suitable for the user. If the query request sent by the SCF carries program-related information (for example, program ID or program type or program metadata) and/or user identity information, the AD server or AD application server returns the personalized advertisement content suitable for the user to the SCF after performing matching of the program metadata, user's personalized data, and advertisement metadata. The personalized content information includes personalized content metadata, description about the personalized content delivery channel, or a display indication, or any combination thereof. Supposing the personalized content is an advertisement, the advertisement metadata includes time of inserting the advertisement, duration of the advertisement, advertisement ID, codec information, or bandwidth, or any combination thereof The description about the advertisement delivery channel includes advertisement channel ID, transmission mode, multicast address, transmission protocol, codec information, or bandwidth, or any combination thereof The advertisement channel ID represents the advertisement type or type of the group of the user. The advertisement type may be household appliance, clothing, electronic product, and so on; and the group type may be group 1, group 2, and so on. The transmission mode is unicast or multicast. The display indication denotes the mode of displaying the advertisement content, for example, alternate display or concurrent display. Alternate display refers to displaying only the advertisement content to the user, and concurrent display refers to displaying the advertisement content and the program content concurrently. The display indication may further indicate the size, color or position of the window.
Step 22: The SCF sends the personalized content information suitable for the user to the UE through a SIP message. More specifically, a network entity may deliver the personalized content information to the UE through a SIP MESSAGE or NOTIFY or INFO message, and this message may be in an Extensible Markup Language (XML) or a Session Description Protocol (SDP) format for carrying the personalized content information. The network entity may be an SCF, an MF, or an AD server.

If the message in the XML format carries the personalized content information, the content type may be defined as content type=application/iptv adsdescripton+xml, and the message body is an XML message body that carries the personalized content information.

If the message in the SDP format carries the personalized content information, supposing the personalized content is advertisements, the information description mode is as follows:
(1) The advertisement metadata may be defined through an "a=" line, for example, a=ads-desc:value, or a=fmtp:ads-desc=<value>. "ads-desc" here is only an example indicating that the property is advertisement metadata description, and may be replaced by another property; and "value" may indicate the location of storing the advertisement metadata or indicate the advertisement metadata. The storage location may be an HTTP URL, a SIP URL, an XML filename, an XML content type, and so on; and the advertisement metadata may be the time of inserting the advertisement, duration of the advertisement, advertisement media ID, codec information, or bandwidth information, or any combination thereof
(2) The description about the advertisement delivery channel may include an advertisement media description line "m=", an advertisement channel ID line "a=", and a bandwidth line "b=". The "m=" line and the "b=" line are consistent with those defined in RFC 4566. The advertisement channel ID line may be "a=ads:ads_id" or "a=fmtp:ads=<ads_id>", where: "ads" indicates that the property is an advertisement channel property; and "ads_id" is an advertisement channel ID composed of numbers or characters, and represents the advertisement type (for example, household appliance, clothing, and electronic product) or the type of the group of the user (for example, group 1, and group 2) or other information.
(3) The display indication may be carried by "a=display:indication" or "a=group:display indication 1 2" or "a=ftmp:display=<indication>". The number "1" here represents a program media stream ID, and "2" represents an advertisement media stream ID. "display" here is only an example indicating that the property is display, and may be replaced by another property; and "indication" represents the location of storing the display indication or represents the display information. The storage location may be an HTTP URL, a SIP URL, an XML filename, or an XML content type; and the display indication may be "alternate display" or "concurrent display". Optionally, the display indication may further include the size, color and position of the window.

The three types of information above are carried by different "a=" lines respectively. Alternatively, the three types of information above may be carried by one "a=" line concurrently, for example, carried by "a=ads-desc:value ads_id indication" or "a=fmtp:ads-desc=<value ads_id indication>". "ads-desc:" indicates the advertisement description property; "value" indicates an address for storing the advertisement metadata or indicates the advertisement metadata; "ads_id" is an advertisement channel ID; and "indication" denotes the location of storing the display indication or denotes the display information.

Step 23: A personalized content delivery channel is created between the UE and the network device according to the personalized content information. Afterward, the network device may send personalized content to the UE through the personalized content delivery channel.

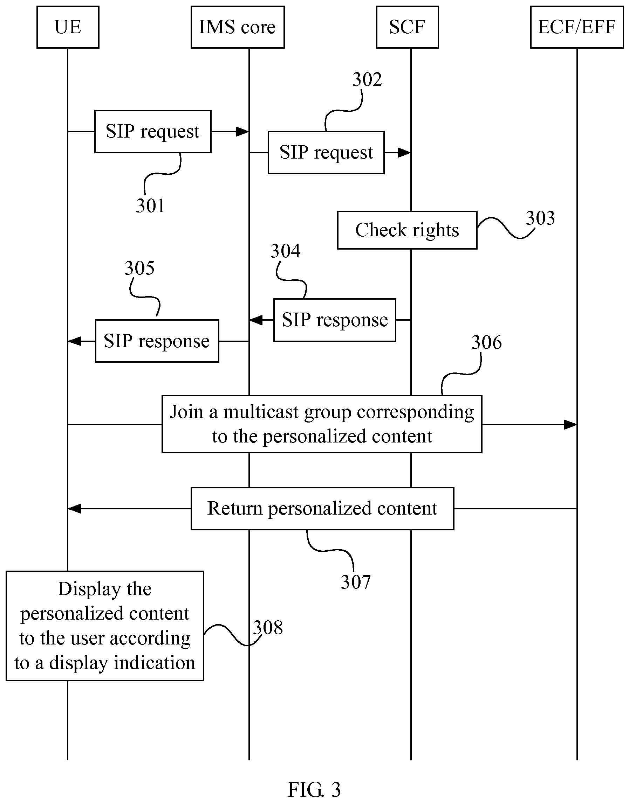

Step 23 is detailed below:
(1) As shown in FIG. 3, the UE sends a SIP request to create a personalized content delivery channel. The personalized content delivery channel is a multicast channel. Supposing the personalized content is an advertisement, the detailed process includes:
   Steps 301-302: The UE sends a SIP request to the SCF through an IMS core network. The SIP request may be a SIP INVITE request. The SIP request carries description about the advertisement delivery channel suitable for the user and determined by the SCF, and may further carry advertisement metadata and/or a display indication. The SDP description mode of such information is the same as that in step 22.
   Step 303: The SCF checks the watching rights of the user. This step is optional. Specifically, this step may be: The SCF finds the subscription profile and/or user data corresponding to the user according to the user ID carried in the SIP request, and judges the watching rights.
   Steps 304-305: If the transmission mode carried in the advertisement delivery channel information is multicast, the SCF returns a SIP response in response to the SIP request through the IMS core network. The SIP response carries the description about the determined advertisement delivery channel suitable for the user.
   Step 306: After receiving the SIP response, the UE sends a request to an Elementary Control Function/Elementary Forwarding Function (ECF/EFF) to join the multicast group corresponding to the advertisement suitable for the user.
   Step 307: The ECF/EFF sends the matched advertisement (namely, personalized content suitable for the user) to the UE.
   Step 308: The UE may display the personalized content to the user according to the display indication in the personalized content information. For example, if the display indication indicates alternate display, the UE replaces the program content with the advertisement content, and displays only the advertisement content to the user; if the display indication indicates concurrent display, the UE displays the advertisement content and the program content to the user concurrently.

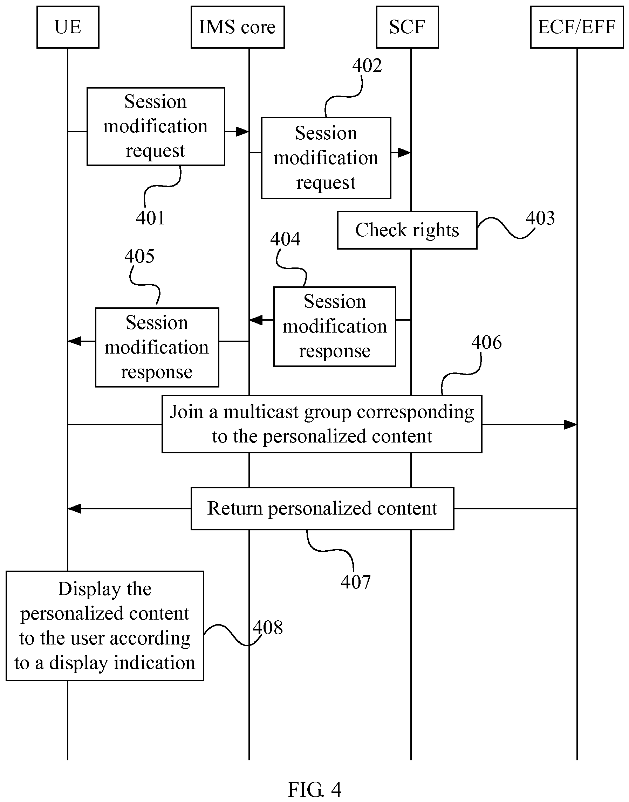

   In this embodiment, the SCF determines the personalized content information suitable for the user; the UE sends a SIP request to trigger creation of a personalized content delivery channel, and the user's individualized content is returned to the UE through multicast.
(2) As shown in FIG. 4, the UE sends a session modification request to create a personalized content delivery channel. The personalized content delivery channel is a multicast channel. It is assumed that the personalized content is an advertisement. In all embodiments of the present invention, the program delivery channel may be a unicast or multicast channel.
   In this embodiment, because the session channel is already created, the network device sends program content to the UE through the program delivery channel. Therefore, the session modification request carries the description about the advertisement delivery channel. The session modification request may be a Re-INVITE request or an UPDATE request. It is necessary to allow for processing of the program delivery channel. There are two processing modes:
   Mode 1: The program content is switched to the advertisement content. For example, in the session modification request, the port number of the program delivery channel is set to 0; and the session modification request carries information about the advertisement delivery channel and may further carry advertisement metadata and/or a display indication. The SDP description mode of such information is the same as that in step 22.
   Mode 2: The program content and the advertisement content coexist. For example, the session modification request reserves the program delivery channel, and carries information about the advertisement delivery channel and may further carry advertisement metadata and/or a display indication. The SDP description mode of such information is the same as that in step 22.

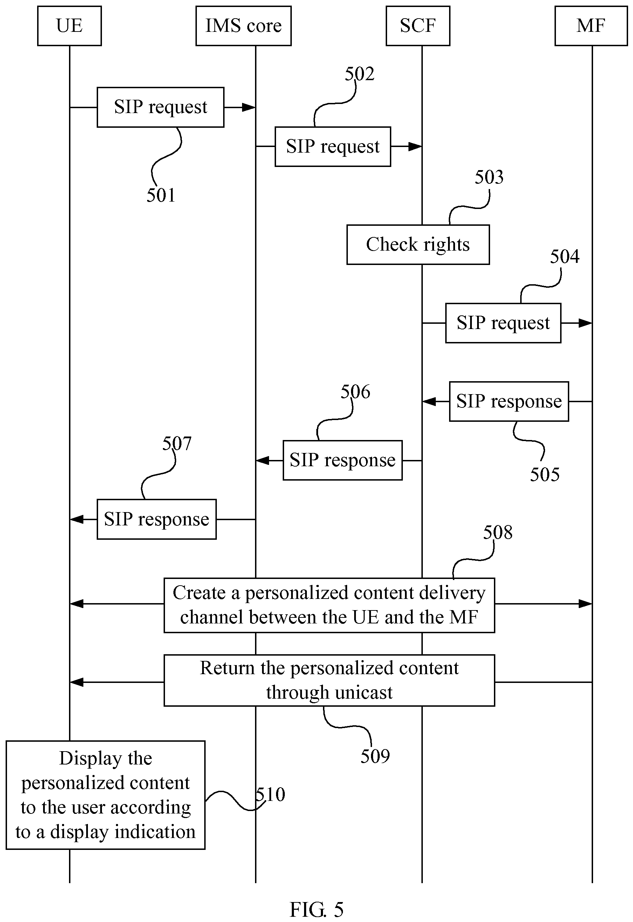

   In this embodiment, the session modification request replaces the SIP request in FIG. 3, and a session modification response replaces the corresponding SIP response in FIG. 3; and the remaining steps are the same as the counterpart of FIG. 3.
   In this embodiment, the SCF determines the personalized content information suitable for the user; the UE sends a session modification request to trigger creation of a personalized content delivery channel, and the user's personalized content is returned to the UE through multicast.
(3) As shown in FIG. 5, the UE sends a SIP request to create a personalized content delivery channel. The personalized content delivery channel is a unicast channel. Supposing the personalized content is an advertisement, the detailed process includes:
   Steps 501-502: The UE sends a SIP request to the SCF through an IMS core network. The SIP request carries description about the advertisement delivery channel suitable for the user and determined by the SCF, and may further carry advertisement metadata and/or a display indication. The SDP description mode of such information is the same as that in step 202.
   Step 503: The SCF checks the watching rights of the user. This step is optional. Specifically, this step may be: The SCF finds the subscription profile and/or user data corresponding to the user according to the user ID carried in the SIP request, and judges the watching rights.
   Step 504: If the transmission mode in the advertisement delivery channel information is unicast, the SCF sends a SIP request to an MF. The MF provides media resources corresponding to the advertisement delivery channel information. That is, the advertisement content suitable for the user can be obtained through the MF.
   Step 505: The MF returns a SIP response to the SCF in response to the SIP request.
   Steps 506-507: The SCF returns a SIP response to the UE through an IMS core network. The SIP response carries the description about the determined advertisement delivery channel suitable for the user.
   Step 508: After the UE receives the SIP response, the UE completes the creation of the personalized content delivery channel to the MF.
   Step 509: The MF sends personalized content to the UE through the personalized content delivery channel.
   Step 510: The UE may display the personalized content to the user according to the display indication in the personalized content media information. For example, if the display indication indicates alternate display, the UE replaces the program content with the advertisement content, and displays only the advertisement content to the user; if the display indication indicates concurrent display, the UE displays the advertisement content and the program content to the user concurrently.

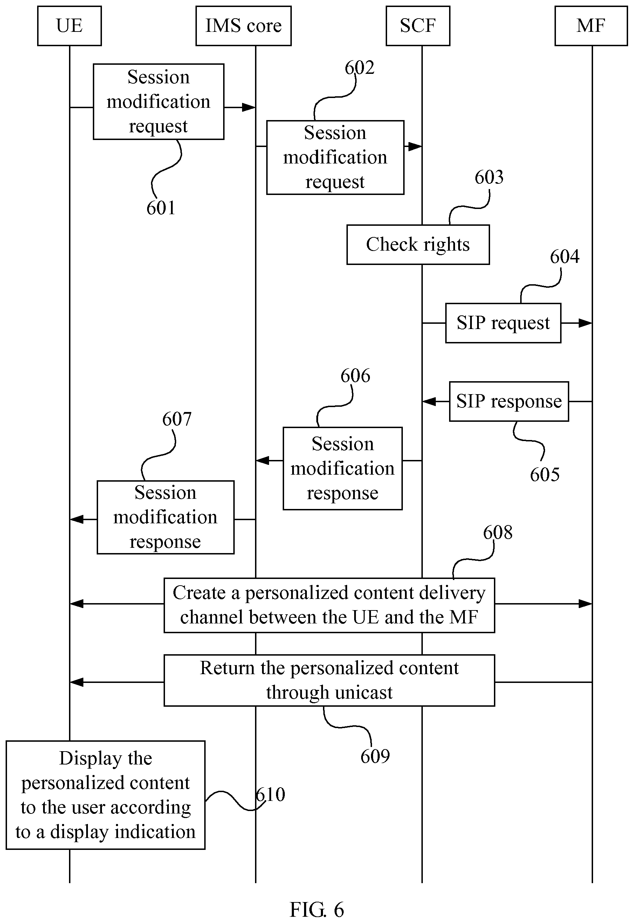

   In this embodiment, the SCF determines the personalized content information suitable for the user; the UE sends a SIP request to trigger creation of a personalized content delivery channel, and the MF returns the user's personalized content to the UE through unicast.
(4) As shown in FIG. 6, the UE sends a session modification request to create a personalized content delivery channel. The personalized content delivery channel is a unicast channel. It is assumed that the personalized content is an advertisement. In this embodiment, because the session channel is already created, the network device sends program content to the UE through the program delivery channel. Therefore, when the session modification request carries the advertisement delivery channel information, it is necessary to allow for processing of the program delivery channel. There are two processing modes:
   Mode 1: The program content is switched to the advertisement content. For example, in the session modification request, the port number of the program delivery channel is set to 0; and the session modification request carries information about the advertisement delivery channel and may further carry advertisement metadata and/or a display indication. The SDP description mode of such information is the same as that in step 22.
   Mode 2: The program content and the advertisement content coexist. For example, the session modification request reserves the program delivery channel, and carries information about the advertisement delivery channel and may further carry advertisement metadata and/or a display indication. The SDP description mode of such information is the same as that in step 22.

In this embodiment, the session modification request replaces the SIP request in FIG. 5, and a session modification response replaces the corresponding SIP response in FIG. 5; and the remaining steps are the same as the counterpart of FIG. 5.

In this embodiment, the SCF determines the personalized content information suitable for the user; the UE sends a session modification request to trigger creation of a personalized content delivery channel, and the MF returns the user's personalized content to the UE through unicast.

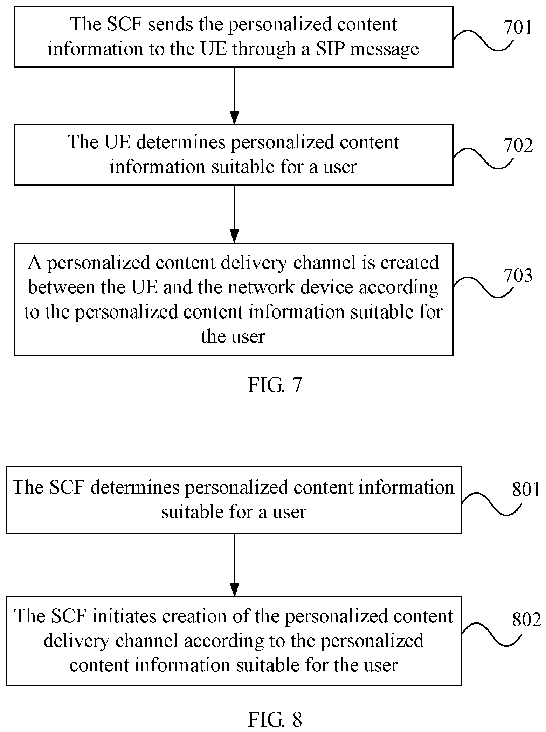

FIG. 7 is a flowchart of a method for creating a personalized content delivery channel according to a third embodiment of the present invention. In this embodiment, the UE determines the personalized content information first, and then creates a personalized content delivery channel. Supposing the personalized content is an advertisement, the detailed process includes:
Step 701: The SCF sends the personalized content information to the UE through a SIP message. The personalized content information and the mode of sending the personalized content information through a SIP request are the same as those in the second embodiment.
Step 702: The UE determines the personalized content information suitable for the user according to the personalized content information carried in the SIP message. Specifically, the personalized content information suitable for the user may be determined according to the personalized content metadata or personalized content channel ID and the user's personalized data.
Step 703: A personalized content delivery channel is created between the UE and the network device according to the personalized content information.

The modes of creating the personalized content delivery channel are the same as the four modes described in the second embodiment. FIG. 8 is a flowchart of a method for creating a personalized content delivery channel according to a fourth embodiment of the present invention. In this embodiment, the SCF determines the personalized content information first, and then creates a personalized content delivery channel. The method includes:
Step 801: The SCF determines personalized content information suitable for the user.

Specifically, the SCF may determine the personalized content information suitable for the user according to the personalized content metadata or personalized content channel ID and the user's personalized data, or query other entities such as the AD server or AD application server for the personalized content information. If the query request sent by the SCF carries program-related information (for example, program ID or program type or program metadata) and/or user identity information, the AD server or AD application server returns the personalized advertisement content suitable for the user to the SCF after performing matching of the program metadata, user's personalized data, and advertisement metadata. For the information carried in the personalized content information, see the second embodiment.

Step 802: The SCF creates a personalized content delivery channel between the UE and the network device according to the personalized content information suitable for the user. Afterward, the network device may send personalized content to the UE through the personalized content delivery channel.

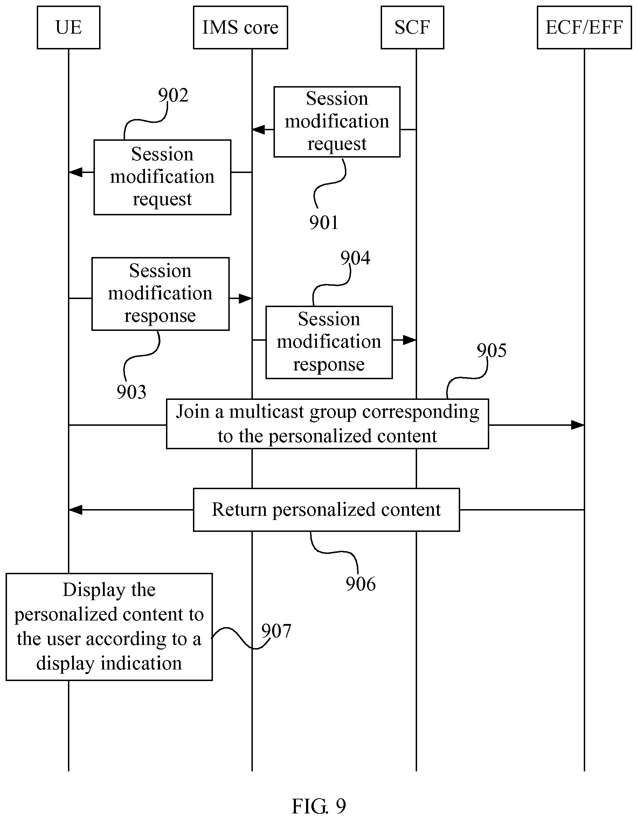

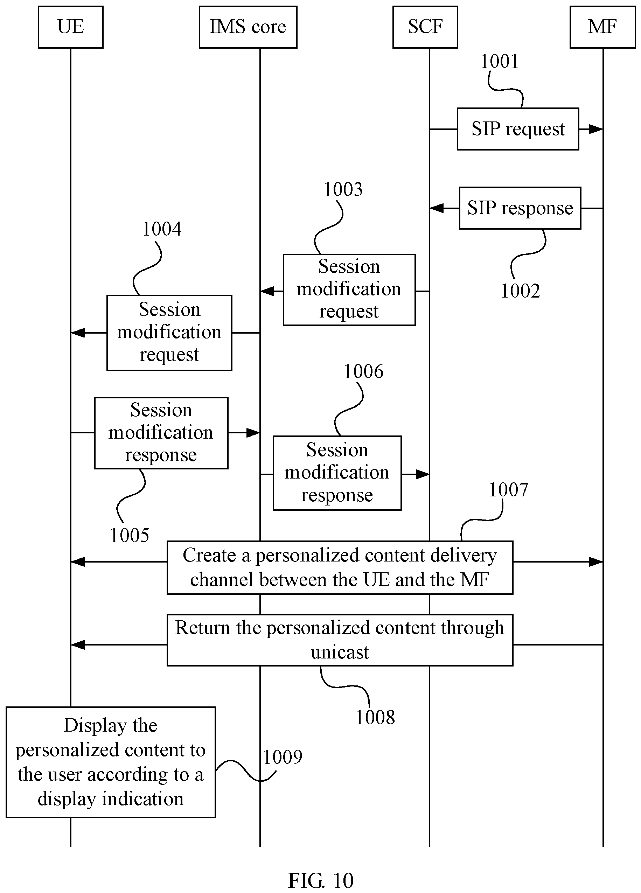

Step 802 is detailed below:
(1) As shown in FIG. 9, the SCF sends a session modification request to trigger creation of a personalized content delivery channel. The personalized content delivery channel is a multicast channel. Supposing the personalized content is an advertisement, the detailed process includes:
   Steps 901-902: If the transmission mode indicated in the description about the personalized content delivery channel in the personalized content information determined by the SCF is multicast, the SCF sends a session modification request to the UE through an IMS core network. The session modification request carries description about the determined personalized content delivery channel suitable for the user, for example, advertisement delivery channel description.
      Because the session channel is already created, the network device sends program content to the UE through the program delivery channel. Therefore, when the session modification request carries the description about the advertisement delivery channel, it is necessary to allow for processing of the program delivery channel. There are two processing modes:
      Mode 1: The program content is switched to the advertisement content. For example, in the session modification request, the port number of the program delivery channel is set to 0; and the session modification request carries information about the advertisement delivery channel and may further carry advertisement metadata and/or a display indication. The SDP description mode of such information is the same as that in step 22.
      Mode 2: The program content and the advertisement content coexist. For example, the session modification request reserves the program delivery channel, and carries information about the advertisement delivery channel and may further carry advertisement metadata and/or a display indication. The SDP description mode of such information is the same as that in step 22.
   Steps 903-904: Through an IMS core network, the UE returns a session modification response to the SCF in response to the session modification request.
   Step 905: Because the transmission mode of the determined personalized content delivery channel is multicast, the UE sends a request to an ECF/EFF to join the multicast group corresponding to the personalized content.
   Step 906: The ECF/EFF sends the corresponding personalized content to the UE.
   Step 907: The UE may display the personalized content to the user according to the display indication in the personalized content information. For example, if the display indication indicates alternate display, the UE replaces the program content with the advertisement content, and displays only the advertisement content to the user; if the display indication indicates concurrent display, the UE displays the advertisement content and the program content to the user concurrently.
      In this embodiment, the SCF determines the personalized content information suitable for the user; the SCF sends a session modification request to trigger creation of a personalized content delivery channel, and the user's personalized content is returned to the UE through multicast.
(2) As shown in FIG. 10, the SCF sends a session modification request to trigger creation of a personalized content delivery channel. The personalized content delivery channel is a unicast channel. Supposing the personalized content is an advertisement, the detailed process includes:
   Step 1001: If the transmission mode in the description about the personalized content delivery channel in the personalized content information determined by the SCF is unicast, the SCF sends a SIP request to the MF that provides the personalized content suitable for the user. The SIP request carries information about the personalized content delivery channel suitable for the user.
   Step 1002: The MF returns a SIP response to the SCF.
   Steps 1003-1004: The SCF sends a session modification request to the UE through an IMS core network. The session modification request carries the description about the advertisement delivery channel that matches the UE.

Because the session channel is already created, the network device sends program content to the UE through the program delivery channel. Therefore, when the session modification request carries the description about the advertisement delivery channel, it is necessary to allow for processing of the program delivery channel. There are two processing modes:
Mode 1: The program content is switched to the advertisement content. For example, in the session modification request, the port number of the program delivery channel is set to 0; and the session modification request carries information about the advertisement delivery channel and may further carry advertisement metadata and/or a display indication. The SDP description mode of such information is the same as that in step 22.
Mode 2: The program content and the advertisement content coexist. For example, the session modification request reserves the program delivery channel, and carries information about the advertisement delivery channel and may further carry advertisement metadata and/or a display indication. The SDP description mode of such information is the same as that in step 22.
Steps 1005-1006: The UE returns a session modification response to the SCF.
Step 1007: According to the information about the matched personalized content delivery channel, the UE creates a personalized content delivery channel to the MF.
Step 1008: The MF sends personalized content to the UE through the personalized content delivery channel.
Step 1009: The session modification request received by the UE may carry a display indication. The display indication is the same as that in the previous embodiment. According to the display indication, the UE displays the personalized content and other content provided by the network. For example, the advertisement content and the program content are displayed alternately or concurrently.

In this embodiment, the SCF determines the personalized content information suitable for the user; the SCF sends a session modification request to trigger creation of a personalized content delivery channel, and the MF sends the personalized content suitable for the user to the UE through unicast.

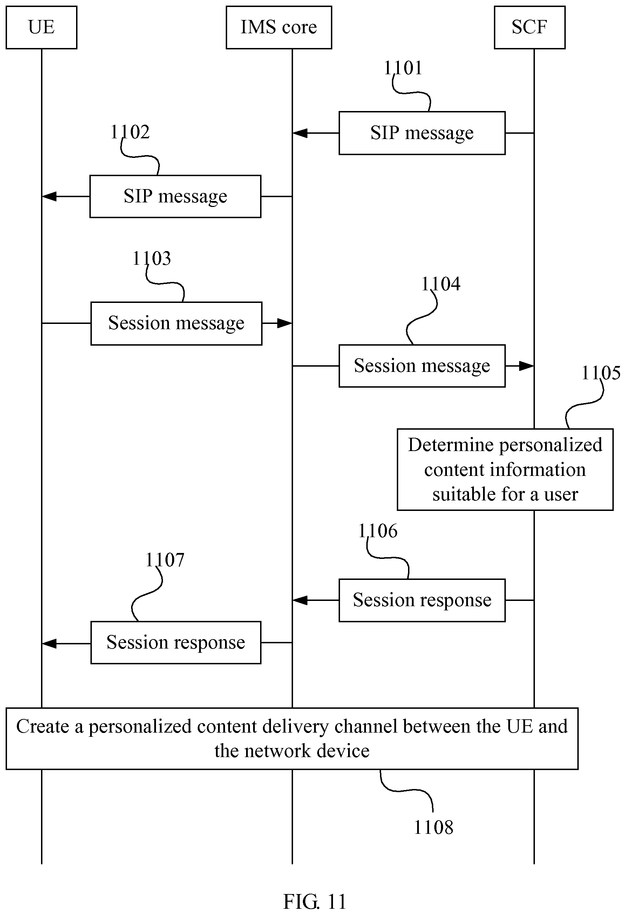

FIG. 11 is a flowchart of a method for creating a personalized content delivery channel according to a fifth embodiment of the present invention. Through a session in this embodiment, the personalized content information is determined, and the personalized content delivery channel is created at the same time, and the SCF determines the personalized content information. Supposing the personalized content is an advertisement, the detailed process includes:
Steps 1101-1102: The SCF sends the personalized content information to the UE through an IMS core network. The personalized content information and the mode of sending the personalized content information through a SIP request are the same as those in the second embodiment.
Steps 1103-1104: According to the personalized content information, the UE sends a session message that carries the description about the personalized content delivery channel to the SCF through the IMS core network. The session message may further carry advertisement metadata and/or a display indication. The SDP description mode of such information is the same as that in step 22.

The session message may be a SIP request shown in FIG. 3 or a session modification request shown in FIG. 4.

Step 1105: According to the description about the personalized content delivery channel, the SCF determines the description about the personalized content delivery channel suitable for the user. Specifically, the SCF may determine the personalized content information suitable for the user according to the personalized content metadata or personalized content channel ID and the user's personalized data, or query other entities such as the AD server or AD application server for the personalized content information suitable for the user. If the query request sent by the SCF carries program-related information (for example, program ID or program type or program metadata) and/or user identity information, the AD server or AD application server returns the personalized advertisement content suitable for the user to the SCF after performing matching of the program metadata, user's personalized data, and advertisement metadata.

Steps 1106-1107: The SCF sends the personalized content information suitable for the user to the UE through a session response.

Step 1108: The UE creates a personalized content delivery channel to the corresponding network device according to the suitable personalized content information. This step is detailed below:
(1) If the transmission mode indicated in the description about the personalized content delivery channel suitable for the user is multicast, the SCF sends the personalized content information suitable for the user to the UE through a session response. At the same time, the SCF sets the port number of the unsuitable personalized content delivery channel to 0. That is, the UE can receive only the content sent from the personalized content delivery channel suitable for the user. In this way, the personalized content is delivered to the user.
   In step 1103 and step 1104, if the UE sends a SIP request to the SCF to request information about the personalized content delivery channel, the SCF sends description about the personalized content delivery channel suitable for the user to the UE through a SIP response. According to the description such as a multicast address, the UE sends a request to the ECF/EFF to join the multicast group corresponding to the personalized content, and the ECF/EFF sends the personalized content to the UE. In step 1103 and step 1104, if the UE sends a session modification request to the SCF to request information about the personalized content delivery channel, the SCF sends description about the personalized content delivery channel suitable for the user to the UE through a session modification response. According to the description such as a multicast address, the UE sends a request to the ECF/EFF to join the multicast group corresponding to the personalized content, and the ECF/EFF sends the personalized content to the UE.
(2) If the transmission mode indicated in the description about the personalized content delivery channel suitable for the user is unicast, the SCF sends a SIP request to the MF that provides the personalized content suitable for the user, and receives a response returned by the MF. Afterward, through a session response, the SCF sends the information about the personalized content delivery channel suitable for the user to the UE, and sets the port number of the unsuitable personalized content delivery channel to 0. That is, the UE can receive only the content sent from the personalized content delivery channel suitable for the user. In this way, suitable personalized content can be provided for the user.

In step 1103 and step 1104, if the UE sends a SIP request to the SCF to request information about the personalized content delivery channel, the SCF sends a SIP request to the corresponding MF first. After receiving a SIP response from the MF, the SCF sends description about the personalized content delivery channel suitable for the user to the UE through a SIP response. According to the description, the UE creates a unicast channel to the corresponding MF, and the MF sends the personalized content to the UE through unicast. In step 1103 and step 1104, if the UE sends a session modification request to the SCF to request information about the personalized content delivery channel, the SCF sends a SIP request to the corresponding MF first. After receiving a SIP response from the MF, the SCF sends description about the personalized content delivery channel suitable for the user to the UE through a session modification response. According to the description, the UE creates a unicast channel to the corresponding MF, and the MF sends the personalized content to the UE through unicast. After receiving the personalized content from the ECF/EFF or MF, the UE may display the personalized content to the user according to the display indication in the description about the personalized content. If the display indication indicates alternate display, the UE replaces the program content with the advertisement content, and displays only the advertisement content to the user; if the display indication indicates concurrent display, the UE displays the advertisement content and the program content to the user concurrently.

In this embodiment, the SCF determines the personalized content information suitable for the user according to the SIP request or session modification request in the process of creating a personalized content delivery channel; and the personalized content suitable for the user is returned to the UE through multicast or unicast.

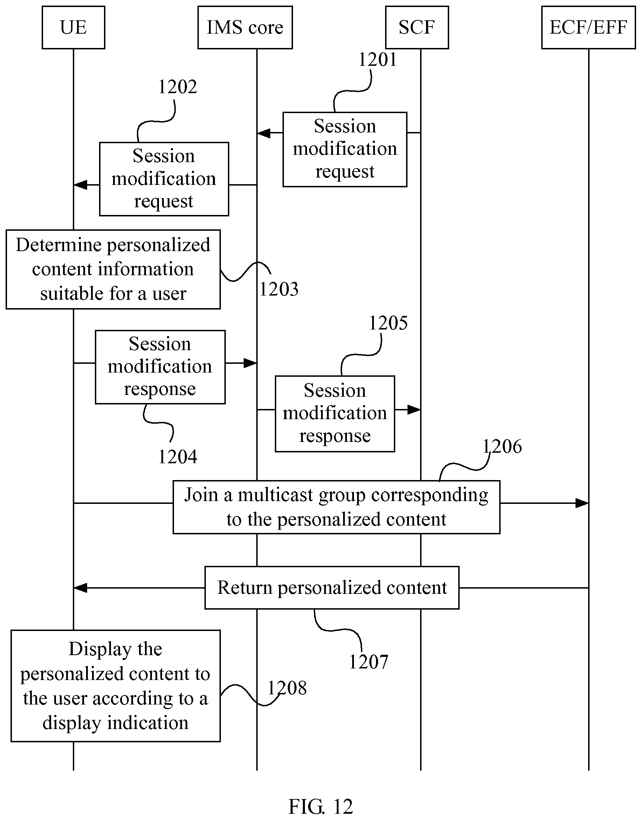

FIG. 12 is a flowchart of a method for creating a personalized content delivery channel according to a sixth embodiment of the present invention. Through a session in this embodiment, the personalized content information is determined, and the personalized content delivery channel is created at the same time, and the UE determines the personalized content information. Supposing the personalized content is an advertisement, the detailed process includes:
Steps 1201-1202: The SCF sends advertisement delivery channel information to the UE through a session modification request, which may carry advertisement metadata and/or a display indication. The SDP description mode of such information is the same as that in step 22.
Step 1203: According to the description about the personalized content delivery channel, the UE determines the personalized content information suitable for the user. Specifically, the personalized content information suitable for the user may be determined according to the personalized content metadata or personalized content channel ID and the user's personalized data.
Steps 1204-1205: Through a session modification response, the UE sends information about the personalized content delivery channel suitable for the user to the SCF.
Step 1206: The UE sends a request to the ECF/EFF to join the multicast group corresponding to the personalized content.
Step 1207: The ECF/EFF sends the personalized content to the UE.
Step 1208: The UE may display the personalized content to the user according to the display indication in the personalized content information. If the display indication indicates alternate display, the UE replaces the program content with the advertisement content, and displays only the advertisement content to the user; if the display indication indicates concurrent display, the UE displays the advertisement content and the program content to the user concurrently.

In this embodiment, the UE determines the personalized content information suitable for the user according to the session modification request in the process of creating a personalized content delivery channel; and the personalized content suitable for the user is returned to the UE through multicast.

Through the foregoing embodiment, the personalized content is played to the user. After completion of playing the personalized content such as the advertisement, the personalized content delivery channel may be deleted. The deletion process is described in the following embodiment.

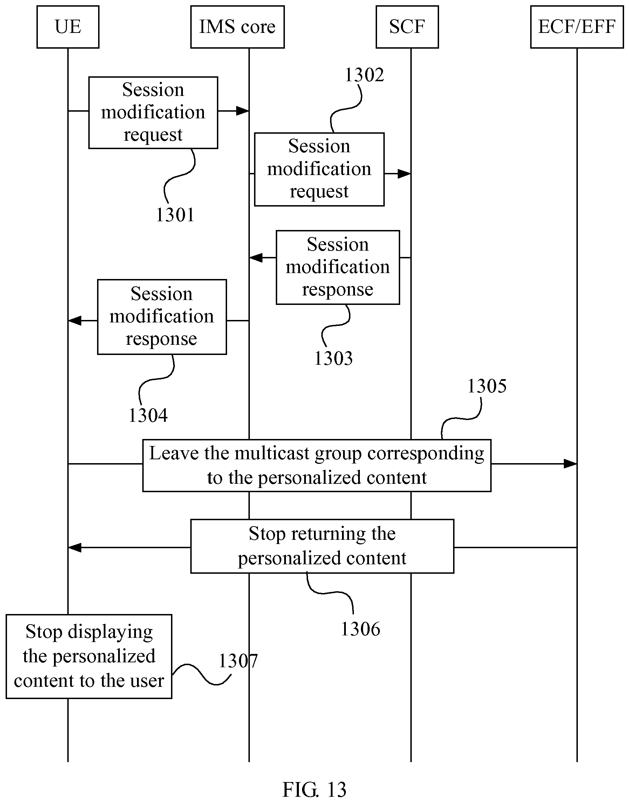

FIG. 13 is a flowchart of deleting a personalized content delivery channel according to a first embodiment of the present invention. In this embodiment, the personalized content delivery channel transmits personalized content through multicast. Supposing the personalized content is an advertisement, the detailed process includes:
Steps 1301-1302: The UE sends a session modification request to the SCF through an IMS core network. If the UE sets the port number of other content (such as a program) to 0 when displaying the personalized content (such as an advertisement) to the user, the UE recovers the program delivery channel (namely, sets the port number back to that existent at the time of creating the session), and sets the port number of the advertisement delivery channel to 0.
Steps 1303-1304: The SCF returns a session modification response to the UE.
Step 1305: The UE sends a request to the ECF/EFF to leave the advertisement multicast group. If the program is transmitted on a multicast channel, the UE may send a request to join the original program multicast group.
Step 1306: The ECF/EFF stops sending the personalized content to the UE.
Step 1307: The UE stops displaying the personalized content to the user. In step 1305, if the UE joins a multicast group of other content (such as program content) provided by the network, the UE receives the program content sent by the ECF/EFF and displays the program content to the user.

Besides, if the original program is transmitted on a multicast channel, the UE may switch from the advertisement content back to the program content by leaving the advertisement multicast group and/or joining the original program multicast group.

In this embodiment, the UE sends a session modification request to leave the multicast group. Alternatively, the sender of the session modification request may be an SCF. That is, the UE is swapped with the SCF in steps 1301-1304, and the remaining steps are the same as steps 1305-1307.

This embodiment enables a UE to delete a personalized content delivery channel where personalized content is received through multicast.

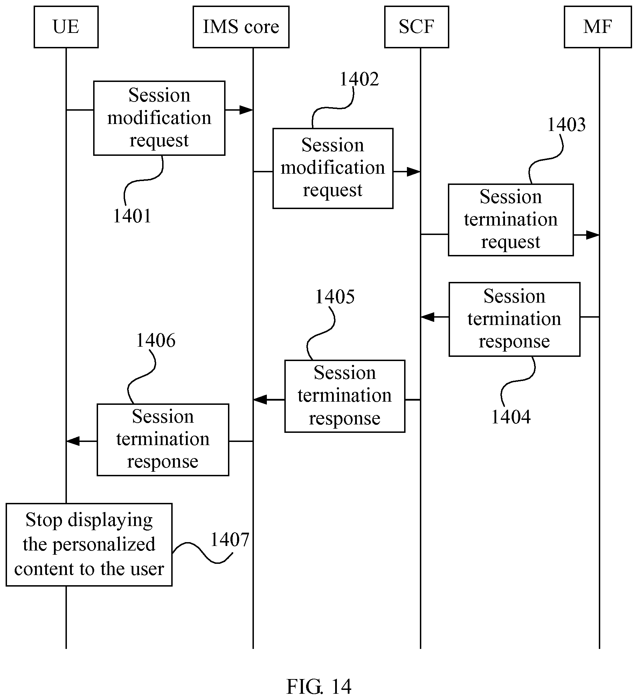

FIG. 14 is a flowchart of deleting a personalized content delivery channel according to a second embodiment of the present invention. In this embodiment, the personalized content delivery channel transmits personalized content through unicast, and the sender of the session modification request is a UE. Supposing the personalized content is an advertisement, the detailed process includes:
Steps 1401-1402: The UE sends a session modification request to the SCF through an IMS core network. If the UE sets the port number of other content (such as a program) to 0 when displaying the personalized content (such as an advertisement) to the user, the UE recovers the program delivery channel (namely, sets the port number back to that existent at the time of creating the session), and sets the port number of the advertisement delivery channel to 0.
Step 1403: The SCF sends a session termination request to the MF that creates the personalized delivery channel.
Step 1404: The MF returns a session termination response to the SCF, and stops sending the personalized content to the UE.
Steps 1405-1406: The SCF returns a session termination response to the UE through an IMS core network.
Step 1407: The UE stops displaying the personalized content to the user. If the program is transmitted through multicast, before stopping the display, the UE needs to send a request to the ECF/EFF to join the program multicast group again.

This embodiment enables a UE to delete a personalized content delivery channel where personalized content is received through unicast.

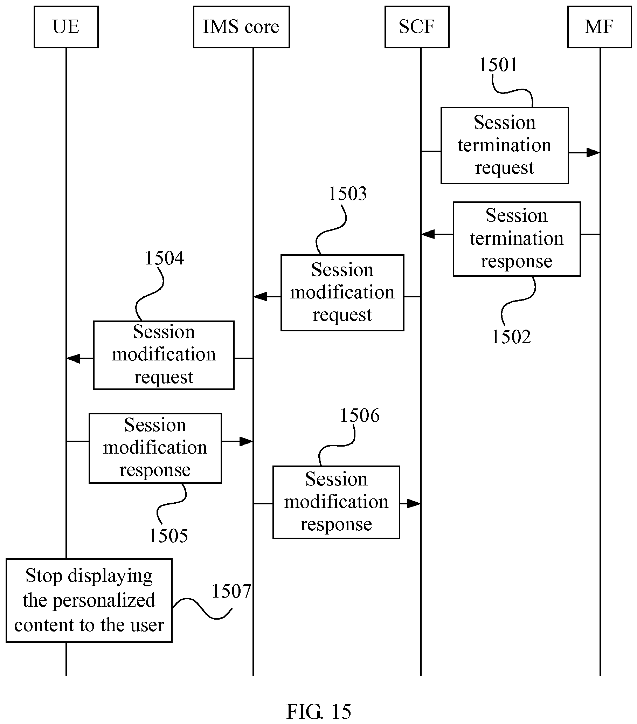

FIG. 15 is a flowchart of deleting a personalized content delivery channel according to a third embodiment of the present invention. The sender of the request for deleting the personalized content delivery channel is an SCF or an MF. In this embodiment, it is assumed that the sender is an SCF, and the personalized content delivery channel transmits the personalized content through unicast. Supposing the personalized content is an advertisement, the detailed process includes:
Step 1501: The SCF sends a session termination request to the MF if the preset condition is fulfilled, for example, if the personalized content is completed.
Step 1502: The MF returns a session termination response to the SCF.
Steps 1503-1504: The SCF sends a session modification request to the UE through an IMS core network. If the UE sets the port number of other content (such as a program) to 0 when displaying the personalized content (such as an advertisement) to the user, the UE recovers the program delivery channel (namely, sets the port number back to that existent at the time of creating the session), and sets the port number of the advertisement delivery channel to 0.
Steps 1505-1506: The UE returns a session modification response to the SCF through the IMS core network.
Step 1507: The UE stops displaying the personalized content to the user. If the program is transmitted through multicast, before stopping the display, the UE needs to send a request to the ECF/EFF to join the program multicast group again.

In this embodiment, the sender of the session termination request may be an MF. The SCF returns a response to the MF, and sends a session modification request to the UE through the IMS. The subsequent process is the same as that described above.

This embodiment enables a network device to delete a personalized content delivery channel where personalized content is received through unicast.

Persons of ordinary skill in the art should understand that all or part of the steps of the method according to the embodiments of the present invention may be implemented by a program instructing relevant hardware. The program may be stored in a computer readable storage medium. When the program runs, the steps of the method according to the embodiments of the present invention are performed. The storage medium may be any medium that is capable of storing program codes, such as a Read Only Memory (ROM), a Random Access Memory (RAM), a magnetic disk, or a Compact Disk-Read Only Memory (CD-ROM).

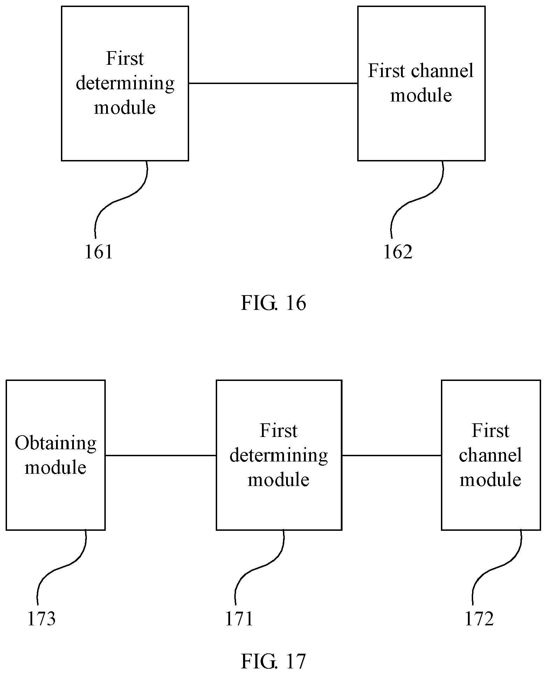

FIG. 16 shows a structure of a UE according to a first embodiment of the present invention. The UE in this embodiment includes: a first determining module 161, configured to determine personalized content information suitable for a user; and a first channel module 162, configured to create a personalized content delivery channel to a network device according to the personalized content information suitable for the user.

FIG. 17 shows a structure of a UE according to a second embodiment of the present invention. The UE in this embodiment includes: an obtaining module 173, configured to receive a SIP request that carries personalized content information from a network device; a first determining module 171, configured to determine the personalized content information suitable for the user according to the personalized content information carried in the SIP message received by the obtaining module 173; and a first channel module 172, configured to create a personalized content delivery channel after the first determining module 171 determines the personalized content information suitable for the user.

In this embodiment, the determining module determines the personalized content information suitable for the user first, and then the channel module creates a personalized content delivery channel.

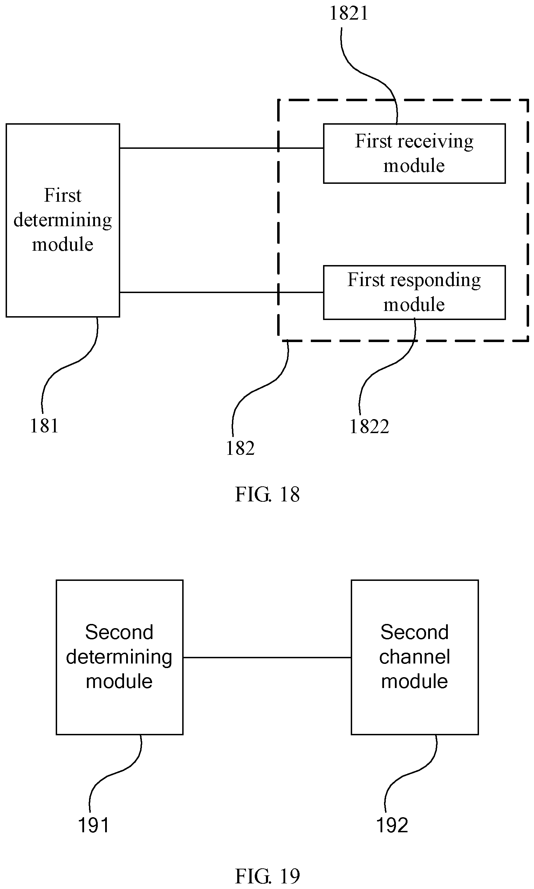

FIG. 18 shows a structure of a UE according to a third embodiment of the present invention. The UE in this embodiment includes a first determining module 181 and a first channel module 182. The first channel module 182 includes a first receiving module 1821 and a first responding module 1822. The first receiving module 1821 is configured to receive a session modification request that carries personalized content information from a network device; the first determining module 181 is configured to determine the personalized content information suitable for the user according to the personalized content information carried in the session modification request received by the first receiving module 1821; and the first responding module 1822 is configured to send the personalized content information suitable for the user and determined by the first determining module 181 to the network device through a response corresponding to the session modification request.

In this embodiment, the creation of the personalized content delivery channel and the determination of the personalized content information occur simultaneously.

In this embodiment, the personalized content information includes personalized content metadata, description about the personalized content delivery channel, or a display indication, or any combination thereof

FIG. 19 shows a structure of a network device according to a first embodiment of the present invention. The network device in this embodiment includes: a second determining module 191, configured to determine personalized content information suitable for a user; and a second channel module 192, configured to create a personalized content delivery channel to the UE according to the personalized content information suitable for the user.

Specifically, the second determining module 191 may be configured to determine the personalized content information suitable for the user, and send the personalized content information to the UE through a SIP message; the UE creates a personalized content delivery channel to the second channel module 192 after obtaining the personalized content information suitable for the user according to the SIP message.

Alternatively, the second determining module 191 may be configured to determine the personalized content information suitable for the user, and send the personalized content information to the UE through a session modification request; the UE creates, after obtaining the personalized content information suitable for the user according to the session modification request, a personalized content delivery channel to the second channel module 192.

In this embodiment, the personalized content information suitable for the user is determined first according to the SIP message or session modification request, and then the personalized content delivery channel is created.

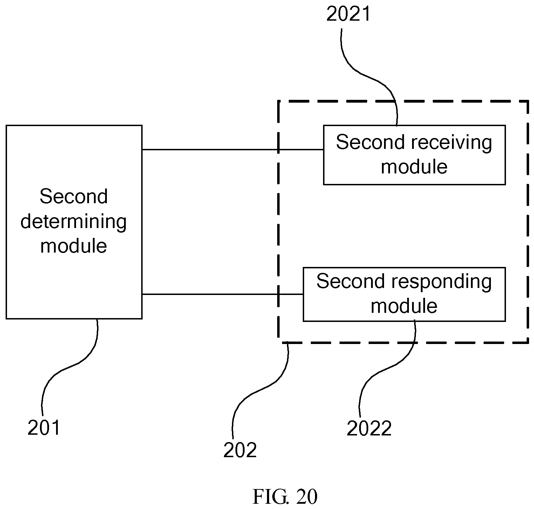

FIG. 20 shows a structure of a network device according to a second embodiment of the present invention. The network device in this embodiment includes a second determining module 201 and a second channel module 202. The second channel module 202 includes a second receiving module 2021 and a second responding module 2022. The second receiving module 2021 is configured to receive a SIP request or a session modification request that carries personalized content information from the UE; the second determining module 201 is configured to determine the personalized content information suitable for the user according to the personalized content information carried in the SIP request or session modification request received by the second receiving module; and the second responding module 2022 is configured to send the personalized content information suitable for the user to the UE through a response corresponding to the SIP request or session modification request.

In this embodiment, the personalized content information includes personalized content metadata, description about the personalized content delivery channel, or a display indication, or any combination thereof.

In this embodiment, the creation of the personalized content delivery channel and the determination of the personalized content information occur simultaneously.

Finally, it should be noted that the above embodiments are merely provided for describing the technical solutions of the present invention, but not intended to limit the present invention.

## Claims

1. A method for creating a personalized content delivery channel, comprising:
determining (101) personalized content information suitable for a user; and
creating (102) a personalized content delivery channel according to the personalized content information suitable for the user;
wherein the personalized content information suitable for the user is determined before the personalized content delivery channel is created;
**characterized in that**, the determining of the personalized content information suitable for the user comprises:
determining, by a Service Control Function, SCF, the personalized content information suitable for the user, and sending the personalized content information suitable for the user to a User Equipment, UE, through a Session Initiation Protocol, SIP, message.

2. The method of claim 1, wherein the creating of the personalized content delivery channel comprises:
sending, by the UE, a SIP request or session modification request that carries the personalized content information suitable for the user to the SCF; returning, by the SCF, a response to the UE, and creating the personalized content delivery channel between the UE and a network device; or
sending, by the SCF, a session modification request that carries the personalized content information suitable for the user to the UE; returning, by the UE, a response to the SCF, and creating the personalized content delivery channel between the UE and the network device; or
sending, by the UE, a SIP request or session modification request that carries the personalized content information to the SCF; sending, by the SCF, the personalized content information suitable for the user to the UE through the response, and creating the personalized content delivery channel between the UE and the network device; or
sending, by the SCF, a session modification request that carries the personalized content information to the UE; sending, by the UE, the personalized content information suitable for the user to the SCF through the response, and creating the personalized content delivery channel between the UE and the network device.

3. The method of claim 2, wherein:
the SIP request is a SIP INVITE request;
the session modification request is a Re-INVITE request or an UPDATE request; and
the SIP message is a SIP MESSAGE or NOTIFY or INFO message.

4. The method of claim 2, wherein:
the personalized content delivery channel is a multicast channel; or
the personalized content delivery channel is a unicast channel.

5. The method of claim 4, further comprising:
sending, by the SCF, the SIP request to a Media Function, MF, that provides the personalized content information suitable for the user, and sending the session modification request or a SIP response or a session modification response to the UE after receiving a response returned by the MF.

6. The method of claim 1, wherein:
the personalized content information comprises personalized content metadata, or description about the personalized content delivery channel, or a display indication, or any combination thereof;
the personalized content metadata comprises time of inserting an advertisement, or duration of the advertisement, or identifier, ID, of the advertisement, or any combination thereof; and
the description about the personalized content delivery channel comprises an ID of the personalized content channel.

7. The method of claim 6, wherein:
the personalized content metadata is carried in an "a" line, and the "a" line comprises a description property of the personalized content metadata and location of storing the personalized content metadata or the personalized content metadata; or
the ID of the personalized content channel is carried in an "a=" line, and the "a=" line comprises properties of the personalized content channel and the ID of the personalized content channel; or
the display indication is carried in an "a=" line or an "a=group:" line, the "a=" line comprises a display property and location of storing the display indication or display information, and the "a=group:" line comprises the display property, the location of storing the display indication or display information, an ID of a program media stream, and an ID of a personalized content media stream; or
the personalized content information is carried in an "a=" line, and the "a=" line comprises the description property of the personalized content metadata, or the location of storing the personalized content metadata or the personalized content metadata, or the ID of the personalized content channel, or the location of storing the display indication or the display information, or any combination thereof.

8. A network device, comprising:
a determining module (191), configured to determine personalized content information suitable for a user; and
a channel module (192), configured to create a personalized content delivery channel to a User Equipment, UE, according to the personalized content information suitable for the user;
**characterized in that**, wherein:
the determining module (191) is specifically configured to determine the personalized content information suitable for the user, and send the personalized content information suitable for the user to the UE through a Session Initiation Protocol, SIP, message.

## Patentansprüche

1. Verfahren zum Erzeugen eines Zustellkanals für personalisierten Inhalt, das Folgendes umfasst:
Bestimmen (101) von Informationen über personalisierten Inhalt, der für einen Anwender geeignet ist; und
Erzeugen (102) eines Zustellkanals für personalisierten Inhalt gemäß den Informationen über personalisierten Inhalt, der für den Anwender geeignet ist;
wobei die Informationen über personalisierten Inhalt, der für den Anwender geeignet ist, bestimmt werden, bevor der Zustellkanal für personalisierten Inhalt erzeugt wird;
**dadurch gekennzeichnet, dass** das Bestimmen der Informationen über personalisierten Inhalt, der für den Anwender geeignet ist, Folgendes umfasst:
Bestimmen durch eine Dienststeuerfunktion, SCF, der Informationen über personalisierten Inhalt, der für den Anwender geeignet ist, und Senden der Informationen über personalisierten Inhalt, der für den Anwender geeignet ist, zu einem Anwendergerät, UE, über eine Nachricht nach dem Sitzungseinleitungsprotokoll, SIP-Nachricht.

2. Verfahren nach Anspruch 1, wobei das Erzeugen des Zustellkanals für personalisierten Inhalt Folgendes umfasst:
Senden durch das UE einer SIP-Anforderung oder Sitzungsmodifikationsanforderung, die die Informationen über personalisierten Inhalt, der für den Anwender geeignet ist, führt, zu der SCF; Zurückgeben durch die SCF einer Antwort zu dem UE und Erzeugen des Zustellkanals für personalisierten Inhalt zwischen dem UE und einer Netzvorrichtung; oder
Senden durch die SCF einer Sitzungsmodifikationsanforderung, die die Informationen über personalisierten Inhalt, der für den Anwender geeignet ist, führt, zu dem UE;
Zurückgeben durch das UE einer Antwort zu der SCF und Erzeugen des Zustellkanals für personalisierten Inhalt zwischen dem UE und der Netzvorrichtung; oder
Senden durch das UE einer SIP-Anforderung oder Sitzungsmodifikationsanforderung, die die Informationen über personalisierten Inhalt führt, zu der SCF; Senden durch die SCF der Informationen über personalisierten Inhalt, der für den Anwender geeignet ist, zu dem UE durch die Antwort und Erzeugen des Zustellkanals für personalisierten Inhalt zwischen dem UE und der Netzvorrichtung; oder
Senden durch die SCF einer Sitzungsmodifikationsanforderung, die die Informationen über personalisierten Inhalt führt, zu dem UE; Senden durch das UE der Informationen über personalisierten Inhalt, der für den Anwender geeignet ist, zu der SCF durch die Antwort und Erzeugen des Zustellkanals für personalisierten Inhalt zwischen dem UE und der Netzvorrichtung.

3. Verfahren nach Anspruch 2, wobei:
die SIP-Anforderung eine SIP INVITE-Anforderung ist;
die Sitzungsmodifikationsanforderung eine Re-INVITE-Anforderung oder eine UPDATE-Anforderung ist; und
die SIP-Nachricht eine SIP MESSAGE- oder NOTIFY- oder INFO-Nachricht ist.

4. Verfahren nach Anspruch 2, wobei:
der Zustellkanal für personalisierten Inhalt ein Gruppenrufkanal ist; oder
der Zustellkanal für personalisierten Inhalt ein Unicast-Kanal ist.

5. Verfahren nach Anspruch 4, das ferner Folgendes umfasst:
Senden durch die SCF der SIP-Anforderung zu einer Medienfunktion, MF, die die Informationen über personalisierten Inhalt, der für den Anwender geeignet ist, bereitstellt, und Senden der Sitzungsmodifikationsanforderung oder einer SIP-Antwort oder einer Sitzungsmodifikationsantwort zu dem UE nach Empfangen einer Antwort, die durch die MF zurückgegeben wird.

6. Verfahren nach Anspruch 1, wobei:
die Informationen über personalisierten Inhalt Metadaten für personalisierten Inhalt oder Beschreibung über den Zustellkanal für personalisierten Inhalt oder eine Anzeigeangabe oder irgendeine Kombination daraus umfassen;
die Metadaten für personalisierten Inhalt Zeit des Einfügens einer Werbung oder Dauer der Werbung oder Bezeichner, ID, der Werbung oder irgendeine Kombination daraus umfassen; und
die Beschreibung über den Zustellkanal für personalisierten Inhalt eine ID des Kanals für personalisierten Inhalt umfasst.

7. Verfahren nach Anspruch 6, wobei:
die Metadaten für personalisierten Inhalt in einer "a"-Zeile geführt sind und die "a"-Zeile eine Beschreibungseigenschaft der Metadaten für personalisierten Inhalt und einen Ort zum Speichern der Metadaten für personalisierten Inhalt oder die Metadaten für personalisierten Inhalt umfasst; oder
die ID des Kanals für personalisierten Inhalt in einer "a="-Zeile geführt ist und die "a="-Zeile Eigenschaften des Kanals für personalisierten Inhalt und die ID des Kanals für personalisierten Inhalt umfasst; oder
die Anzeigeangabe in einer "a="-Zeile oder einer "a=group:"-Zeile geführt ist, die "a="-Zeile eine Anzeigeeigenschaft und einen Ort zum Speichern der Anzeigeangabe oder Anzeigeinformationen umfasst und die "a=group:"-Zeile die Anzeigeeigenschaft, den Ort zum Speichern der Anzeigenangabe oder Anzeigeinformationen, eine ID eines Programmmedienstroms und eine ID des Medienstroms für personalisierten Inhalt umfasst; oder
die Informationen über personalisierten Inhalt in einer "a="-Zeile geführt sind und die "a="-Zeile die Beschreibungseigenschaft der Metadaten für personalisierten Inhalt oder den Ort zum Speichern der Metadaten für personalisierten Inhalt oder die Metadaten für personalisierten Inhalt oder die ID des Kanals für personalisierten Inhalt oder den Ort zum Speichern der Anzeigeangabe oder die Anzeigeinformationen oder eine Kombination daraus umfasst.

8. Netzvorrichtung, die Folgendes umfasst:
ein Bestimmungsmodul (191), das konfiguriert ist, Informationen über personalisierten Inhalt, der für einen Anwender geeignet ist, zu bestimmen; und
ein Kanalmodul (192), das konfiguriert ist, einen Zustellkanal für personalisierten Inhalt zu einem Anwendergerät, UE, gemäß den Informationen über personalisierten Inhalt, der für den Anwender geeignet ist, zu erzeugen;
**dadurch gekennzeichnet, dass** wobei:
das Bestimmungsmodul (191) insbesondere konfiguriert ist, die Informationen über personalisierten Inhalt, der für den Anwender geeignet ist, zu bestimmen und die Informationen über personalisierten Inhalt, der für den Anwender geeignet ist, zu dem UE über eine Sitzungseinleitungsprotokoll-Nachricht, SIP-Nachricht, zu senden.

## Revendications

1. Procédé de création d'un canal de distribution de contenu personnalisé, comprenant les étapes suivantes :
déterminer (101) des informations de contenu personnalisé adaptées à un utilisateur ;
et
créer (102) un canal de distribution de contenu personnalisé en fonction des informations de contenu personnalisé adaptées à l'utilisateur ;
où les informations de contenu personnalisé adaptées à l'utilisateur sont déterminées avant que le canal de distribution de contenu personnalisé soit créé ;
**caractérisé en ce que** la détermination des informations de contenu personnalisé adaptées à l'utilisateur comprend les étapes suivantes :
déterminer, par une fonction de commande de service, SCF, les informations de contenu personnalisé adaptées à l'utilisateur, et envoyer les informations de contenu personnalisé adaptées à l'utilisateur à un équipement d'utilisateur, UE, par l'intermédiaire d'un message de protocole d'ouverture de session, SIP.

2. Procédé selon la revendication 1, dans lequel la création du canal de distribution de contenu personnalisé comprend les étapes suivantes :
envoyer, par l'UE, une demande SIP ou une demande de modification de session, qui achemine les informations de contenu personnalisé adaptées à l'utilisateur, à la SCF ;
retourner, par la SCF, une réponse à l'UE, et créer le canal de distribution de contenu personnalisé entre l'UE et un dispositif de réseau ; ou
envoyer, par la SCF, une demande de modification de session, qui achemine les informations de contenu personnalisé adaptées à l'utilisateur, à l'UE ; retourner, par l'UE, une réponse à la SCF, et créer le canal de distribution de contenu personnalisé entre l'UE et le dispositif de réseau ; ou
envoyer, par l'UE, une demande SIP ou une demande de modification de session, qui achemine les informations de contenu personnalisé, à la SCF ; envoyer, par la SCF, les informations de contenu personnalisé adaptées à l'utilisateur, à l'UE par l'intermédiaire de la réponse, et créer le canal de distribution de contenu personnalisé entre l'UE et le dispositif de réseau ; ou
envoyer, par la SCF, une demande de modification de session, qui achemine les informations de contenu personnalisé, à l'UE ; envoyer, par l'UE, les informations de contenu personnalisé adaptées à l'utilisateur, à la SCF par l'intermédiaire de la réponse, et créer le canal de distribution de contenu personnalisé entre l'UE et le dispositif de réseau.

3. Procédé selon la revendication 2, dans lequel :
la demande SIP est une demande SIP INVITE ;
la demande de modification de session est une demande Re-INVITE ou une demande UPDATE ; et
le message SIP est un message SIP MESSAGE ou NOTIFY ou INFO.

4. Procédé selon la revendication 2, dans lequel :
le canal de distribution de contenu personnalisé est un canal de diffusion groupée ; ou
le canal de distribution de contenu personnalisé est un canal d'envoi individuel.

5. Procédé selon la revendication 4, comprenant en outre les étapes suivantes :
envoyer, par la SCF, la demande SIP à une fonction média, MF, qui fournit les informations de contenu personnalisé adaptées à l'utilisateur, et envoyer la demande de modification de session ou une réponse SIP ou une réponse de modification de session à l'UE après avoir reçu une réponse retournée par la MF.

6. Procédé selon la revendication 1, dans lequel :
les informations de contenu personnalisé comprennent des métadonnées de contenu personnalisé, ou une description concernant le canal de distribution de contenu personnalisé, ou une indication d'affichage, ou toute combinaison de celles-ci ;
les métadonnées de contenu personnalisé comprennent le temps d'insertion d'une annonce publicitaire, ou la durée de l'annonce publicitaire, ou un identifiant, ID, de l'annonce publicitaire, ou toute combinaison de ceux-ci ; et
la description concernant le canal de distribution de contenu personnalisé comprend un identifiant du canal de contenu personnalisé.

7. Procédé selon la revendication 6, dans lequel :
les métadonnées de contenu personnalisé sont acheminées dans une ligne « a », et la ligne « a » comprend une propriété de description des métadonnées de contenu personnalisé et un emplacement de stockage des métadonnées de contenu personnalisé ou les métadonnées de contenu personnalisé ; ou
l'ID du canal de contenu personnalisé est acheminé dans une ligne « a = », et la ligne « a = » comprend des propriétés du canal de contenu personnalisé et l'ID du canal de contenu personnalisé ; ou
l'indication d'affichage est acheminée dans une ligne « a = » ou une ligne « a=group: », la ligne « a= » comprend une propriété d'affichage et un emplacement de stockage de l'indication d'affichage ou des informations d'affichage, et la ligne « a=group: » comprend la propriété d'affichage, l'emplacement de stockage des indications d'affichage ou des informations d'affichage, un ID d'un flux multimédia de programme, et un ID d'un flux multimédia de contenu personnalisé ; ou
les informations de contenu personnalisé sont acheminées dans une ligne « a = », et la ligne « a = » comprend la propriété de description des métadonnées de contenu personnalisé, ou l'emplacement de stockage des métadonnées de contenu personnalisé ou les métadonnées de contenu personnalisé, ou l'ID du canal de contenu personnalisé, ou l'emplacement de stockage de l'indication d'affichage ou des informations d'affichage, ou toute combinaison de ceux-ci.

8. Dispositif de réseau comprenant :
un module de détermination (191), configuré pour déterminer des informations de contenu personnalisé adaptées à un utilisateur ; et
un module de canal (192), configuré pour créer un canal de distribution de contenu personnalisé à un équipement d'utilisateur, UE, en fonction des informations de contenu personnalisé adaptées à l'utilisateur ;
**caractérisé en ce que** :
le module de détermination (191) est spécifiquement configuré pour déterminer les informations de contenu personnalisé adaptées à l'utilisateur, et envoyer les informations de contenu personnalisé adaptées à l'utilisateur à l'UE par l'intermédiaire d'un message de protocole d'ouverture de session, SIP.
